# EUROPEAN PATENT APPLICATION

(11) **EP 4 089 828 A1**
(43) Date of publication of application: **16.11.2022**
(21) Application number: 21185702.4
(22) Date of filing: 15.07.2021
(51) Int. Cl.: H01M 50/547

(54) **BATTERY, BATTERY APPARATUS AND BATTERY PACK**

(30) Priority: 14.05.2021 CN 202110526791
(71) Applicant: CALB Co., Ltd., Changzhou City, Jiangsu Province (CN)
(72) Inventor: Xu, Jiuling, Changzhou City (CN); Pan, Fangfang, Changzhou City (CN); Zhang, Yongjie, Luoyang City (CN); Qi, Binwei, Luoyang City (CN)
(74) Representative: Becker, Eberhard

(57) **Abstract**

The disclosure relates to the technical field of batteries, and provides a battery, a battery apparatus and a battery pack. The battery includes a battery surface and a pole element (110). The battery surface is provided with a first recess (16), and the first recess (16) is used to accommodate the pole element (40) of the other battery (2). The pole element (110) is arranged on the battery surface and is located outside a range where the first recess (16) is located. By providing the first recess (16) on the battery surface, the pole element (40) of the other battery (2) can be accommodated in the first recess (16) when the batteries are grouped.

## Description

### BACKGROUND

### Field of the Disclosure

The disclosure relates to the technical field of batteries, in particular to a battery, a battery apparatus and a battery pack.

### Description of Related Art

In the process of forming a battery apparatus in the related technologies, it is necessary to reduce the distance between the batteries as much as possible to improve the space utilization of battery modules. Due to the structural limitations of the battery itself, it is difficult to shorten the distance between batteries in the process of packing the batteries in sets in related technologies.

### SUMMARY OF THE DISCLOSURE

The disclosure provides a battery, a battery apparatus and a battery pack to improve the battery structure.

According to the first aspect of the disclosure, a battery is provided, including:
A battery surface on which a first recess is provided, and the first recess is configured to receive a pole element of the other battery.

A pole element is arranged on the surface of the battery and is located outside a range where the first recess is located.

The battery in the embodiment of the disclosure includes a battery surface and a pole element. By providing a first recess on the battery surface, the pole element of the other battery can be accommodated in the first recess when the battery is formed in a set, thereby avoiding the pole element from occupying the space between the two batteries, and the distance between two adjacent batteries can be reduced, thus increasing the energy density of the battery apparatus.

According to the second aspect of the disclosure, a battery apparatus is provided, including:
A first battery includes a first battery surface and a first pole element, the first pole element is disposed on the first battery surface, and the first battery surface is provided with a first recess.

A second battery includes a second battery surface and a second pole element. The second pole element is arranged on the second battery surface and protrudes from the second battery surface so that the top of the second pole element is higher than the top of the second battery surface.

The first battery and the second battery are arranged side by side, so that at least a part of the second pole element is located in the first recess.

The battery apparatus in the embodiment of the disclosure includes a first battery and a second battery. By providing a first recess on the first battery surface of the first battery, and when the first battery and the second battery are formed in a set, the second pole element of the second battery is located in the first recess, thereby preventing the pole element from occupying the space between the two batteries, thus reducing the distance between two adjacent batteries, thereby increasing the energy density of the battery apparatus.

According to a third aspect of the disclosure, a battery is provided and adapted to the above-mentioned battery, including:
A battery surface.

A pole element is arranged on the battery surface and configured to be accommodated in the first recess.

In the battery described in the embodiment of the disclosure, the pole element is accommodated in the first recess of the other battery, thereby avoiding the pole element from occupying the space between the two batteries, and the distance between two adjacent batteries can be reduced, thereby enhancing the energy density of the battery apparatus.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
Fig. 1 is a schematic structural view of a battery according to a first exemplary embodiment.
Fig. 2 is a schematic view showing a partial structure of a battery according to a first exemplary embodiment.
Fig. 3 is a schematic view showing the structure of a battery according to a second exemplary embodiment.
Fig. 4 is a schematic view showing a partial structure of a battery according to a second exemplary embodiment.
Fig. 5 is a schematic exploded view showing a partial structure of a battery according to a second exemplary embodiment.
Fig. 6 is a schematic view showing a partial structure of a part of a battery according to a third exemplary embodiment.
Fig. 7 is a schematic view showing a partial structure of a battery apparatus according to an exemplary embodiment.
Fig. 8 is a schematic structural view showing a second pole element of a battery apparatus according to an exemplary embodiment.
Fig. 9 is a schematic view showing a partial structure of a first battery of a battery apparatus according to an exemplary embodiment.
Fig. 10 is a schematic exploded view showing a partial structure of a first battery of a battery apparatus according to an exemplary embodiment.
Fig. 11 is a schematic view showing a partial structure of a part of a first battery of a battery apparatus according to another exemplary embodiment.

### DESCRIPTION OF EMBODIMENTS

The technical solutions in the exemplary embodiments of the present disclosure will be described clearly and thoroughly with reference to the accompanying drawings in the exemplary embodiments of the present disclosure. The exemplary embodiments described herein are for illustrative purposes only, and are not used to limit the scope of protection of the present disclosure. Therefore, it should be understood that various modifications and changes can be made to exemplary embodiments without departing from the scope to be protected by the present disclosure.

In the description of the present disclosure, unless expressly stipulated and defined otherwise, the terms "first" and "second" are only used for descriptive purposes, and cannot be understood as indicating or implying relative importance; the term "plurality" means two or more; the term "and/or" includes any and all combinations of one or more of the associated listed items. In particular, reference to "the/said" item or "an" item is also intended to mean one of a number of such items possible.

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the"object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

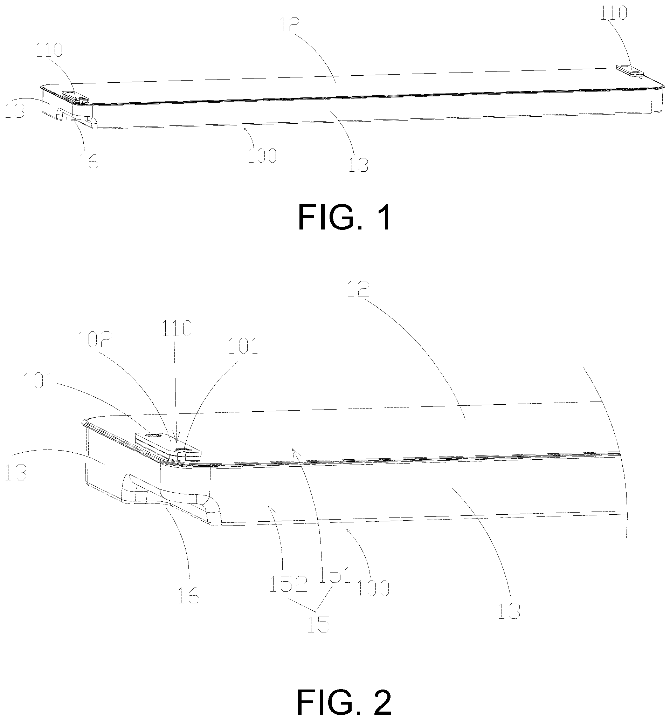

An embodiment of the disclosure provides a battery. Please refer to FIG. 1 to FIG. 6. The battery includes a battery body 100. The battery body 100 is provided with a first recess 16 for accommodating a pole element of the other battery; a pole element 110, which is disposed on the battery body 100, and is located outside a range where the first recess 16 is located.

The battery in an embodiment of the disclosure includes a battery body 100 and a pole element 110. The battery body 100 is provided with a first recess 16 so that the pole element of the other battery can be accommodated in the first when the batteries are formed in a set, such that it is possible to prevent pole element from occupying the space between the two batteries, and the distance between two adjacent batteries can be reduced, thereby increasing the energy density of the battery apparatus.

It should be noted that the first recess 16 on the battery body 100 is configured to accommodate the pole element of the other battery, that is, when two batteries are formed in a set, the protruding pole element of the other battery can be accommodated in the first recess 16.

In an embodiment, the pole element 110 is arranged in the manner of protruding from the battery body 100, so that the top of the pole element 110 is higher than the top of the battery body 100 to facilitate subsequent connection of the pole element 110. Under the circumstances, the protruding pole element 110 may be disposed in the first recess of the other battery during the grouping process.

The top of the pole element 110 can be interpreted as one end of the pole element 110 away from the bottom wall 111, and the top of the battery body 100 can be interpreted as a surface of the battery body 100 close to the top of the pole element 110. Further, the battery body 100 is placed horizontally and the pole element 110 is extended in the vertical direction. Under the circumstances, a surface of the pole element 110 at the highest point is the top of the pole element 110, and correspondingly, a surface of the battery body 100 at the highest point is the top of the battery body 100. The top mentioned here is mainly to reflect the positional relationship between the pole element 110 and the battery body 100, and does not specifically refer to the top in any orientation.

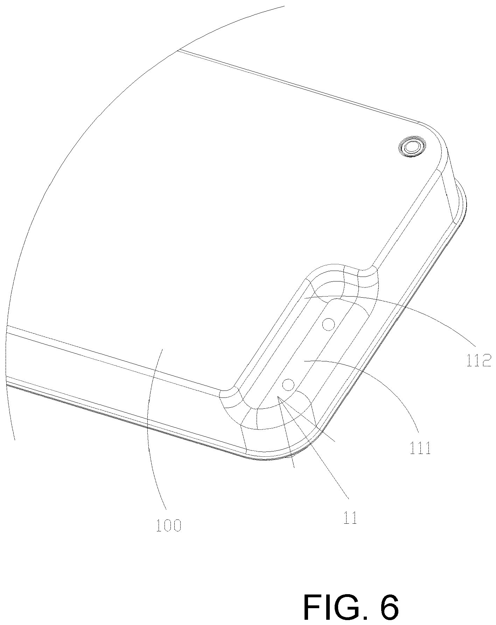

In an embodiment, the battery body 100 is provided with a second recess 11, and the pole element 110 is located in the second recess 11, so that the top of the pole element 110 is not higher than the top of the battery body 100, thereby avoiding the pole element 110 from occupying the space in the battery apparatus when the batteries are formed in a set, which improves the energy density and space utilization of the battery. Besides, there is no need to provide a second recess for accommodating the pole element 110 on the other battery. FIG. 6 shows that the battery body 100 is provided with a second recess 11, and the pole element 110 is not arranged in the second recess 11.

It should be noted that the second recess 11 includes a bottom wall 111 and a lateral wall 112, that is, the bottom wall 111 and the lateral wall 112 enclose the second recess 11, and the second recess 11 is formed downward on the battery body 100, that is, the second recess 11 extends along and inside the battery body 100. Therefore, it is possible to prevent the pole element 110 from protruding from the battery body 100.

In some embodiments, the pole element 110 and the first recess 16 may be disposed on the same side of the battery body 100.

In some embodiments, the first recess 16 is provided on a side of the battery body 100 away from the pole element 110, that is, the pole element 110 and the first recess 16 are respectively provided on two opposite sides of the battery body 100. In this manner, the configuration space of the battery body 100 can be fully utilized, and it does not appear to be difficult to arrange the pole element 110 and the first recess 16.

In an embodiment, the projection of the first recess 16 along the surface of the battery body 100 where the pole element 110 is arranged at least partially overlaps with the pole element 110. That is, the projections of the first recess 16 and the pole element 110 on one surface perpendicular to the battery body 100 are at least partially overlapped, so that the two batteries can be aligned with each other when the batteries are grouped. Moreover, it can be ensured that the pole element of the other battery can be reliably accommodated in the first recess 16 and the consistency of battery processing can be ensured to facilitate the processing.

It should be noted that the specific structure of the first recess 16 may not be limited as long as it is ensured that the pole element of the other battery can be accommodated. In some embodiments, it is not excluded that the first recess 16 and the second recess 11 are consistent in structure.

Optionally, the battery body 100 is approximately a rectangular structure, that is, while ignoring processing and manufacturing errors, the battery body 100 may have a rectangular structure.

In an embodiment, as shown in FIG. 1 to FIG. 4, the battery body 100 includes two first surfaces 12 opposite to each other as well as four second surfaces 13 arranged around the first surfaces 12, that is, the battery body 100 is approximately a rectangular structure. The area of the first surface 12 is larger than the area of the second surface 13; the first recess 16 and the pole element 110 are both arranged on the first surface 12, so as to ensure that the pole element 110 has a reliable supporting surface. In this way, the stability of the pole element 110 is ensured. The first recess 16 and the pole element 110 may be provided on the same first surface 12, or the first recess 16 and the pole element 110 may be provided on the two first surfaces 12, respectively.

It should be noted that the two first surfaces 12 opposite to each other are large surfaces of the battery body 100, and the four second surfaces 13 are small surfaces of the battery body 100. The four second surfaces 13 include two pairs of small surfaces, that is, the first pair of small surfaces extending in the length direction of the battery body 100 as well as the second pair of small surfaces extending in the width direction of the battery body 100, and the area of the first pair of small surfaces is larger than the area of the second pair of small surfaces, but both of the areas are smaller than the area of the large surface. When the first recess 16 is disposed on the first surface 12, the depth direction of the first recess 16 is the height direction of the battery body 100.

In an embodiment, there are two first recesses 16 and two pole elements 110. When the first recesses 16 are located on the same side of the battery body 100, the two first recesses 16 are respectively configured for accommodating the two pole elements of a battery. When the first recesses 16 are located on two opposite sides of the battery body 100, the two first recesses 16 can be configured to accommodate the pole elements of the two batteries.

In an embodiment, the two first recesses 16 are located on the same side of the battery body 100, and the two pole elements 110 are located on the same side of the battery body 100, that is, the two first recesses 16 are respectively configured for accommodating two pole elements of a battery, thereby ensuring the effective use of the configuration space.

In an embodiment, the two first recesses 16 are symmetrically arranged about the intersection of the first diagonal direction and the second diagonal direction of the battery body 100, and the two pole elements 110 are symmetrically arranged about the intersection of the first diagonal direction and the second diagonal direction of the battery body 100. In this manner, the direction of the battery body 100 can be adjusted according to the series connection or parallel connection between the batteries during the battery grouping process, that is, the position of the two pole elements 110 can be switched according to requirements, thus simplifying the connection between the batteries.

It should be noted that the two first recesses 16 are symmetrically arranged about the intersection of the first diagonal direction and the second diagonal direction of the battery body 100, that is, after one first recess 16 rotates by 180 degrees around the intersection of the first diagonal direction and the second diagonal direction, the two first recesses 16 overlap each other.

Optionally, the two first recesses 16 are arranged at intervals along the first diagonal direction of the battery body 100, and the two pole elements 110 are arranged at intervals along the first diagonal direction of the battery body 100. In this manner, the direction of the battery body 100 can be adjusted according to series connection or parallel connection between the batteries in the battery grouping process. That is, the positions of the two pole elements 110 can be switched according to the requirements, thereby simplifying the connection between the batteries.

It should be noted that the two pole elements 110 are respectively a positive pole element and a negative pole element. When two adjacent batteries are connected in parallel, the two positive pole elements of the two batteries can be arranged close to each other. Two negative pole elements of the two batteries are arranged close to each other, and then the connection is completed. When two adjacent batteries are connected in series, the positive pole element of one battery and the negative pole element of the other battery can be arranged close to each other to facilitate the connection. In actual practice, it is similar to rotating the battery body 100 by 180 degrees.

It should be noted that the battery body 100 has a length direction, a width direction and a diagonal direction, and the length direction, the width direction and the diagonal direction are all linear directions. The length direction may be the longer extension direction of the battery body 100, and the width direction may be the shorter extension direction of the battery body 100, and the diagonal direction is actually the line between the two diagonal corners of the battery body 100, thereby forming the first diagonal direction and the second diagonal direction.

In an embodiment, the two first recesses 16 are symmetrically arranged about the intersection of the first diagonal direction and the second diagonal direction of the battery body 100, and the two pole elements 110 are symmetrically arranged about the intersection of the first diagonal direction and the second diagonal direction of the battery body 100. In this manner, after the two batteries are connected in series, that is, after the position of the battery body 100 is adjusted, it can be ensured that the two pole elements 110 of the two batteries can be located in relatively fixed positions, so that the same bus bar can be configured to connect batteries in series and in parallel.

In some embodiments, the two pole elements 110 may not be symmetrically arranged about the intersection of the first diagonal direction and the second diagonal direction of the battery body 100, that is, the two batteries need bus bars of different structures when connected in series and in parallel. However, since the two pole elements 110 are arranged diagonally, their relative positions do not change much, and the connection is easier.

In an embodiment, the two pole elements 110 may be arranged at intervals along the length direction of the battery body 100, or the two pole elements 110 may be arranged at intervals along the width direction of the battery body 100. Or, the two pole elements 110 may be respectively disposed on two opposite sides of the battery body 100, which should not be construed as a limitation to the disclosure, and can be determined according to actual requirements.

In an embodiment, the pole element 110 and the first recess 16 are respectively located on two opposite surfaces of the battery body 100, so as to ensure that the pole element 110 and the first recess 16 can be reasonably arranged on the battery body 100. In addition, it is possible to ensure that the first recess 16 accommodates the pole elements of other batteries during the battery grouping process.

Further, the projection of the pole element 110 along the surface of the battery body 100 where the first recess 16 is provided is at least partially overlapped with the first recess 16. In other words, the pole element 110 and the first recess 16 that are located on two opposite surfaces of the battery body 100 are directly opposite to each other in terms of their spatial positions. In this manner, when the batteries are grouped, the two batteries can be aligned with each other, and it can be ensured that the first recess and the pole element are mutually adapted and accommodated.

In an embodiment, the first recess 16 and the pole element 110 are located on the same side of the battery body 100, and the first recess 16 and the pole element 110 are symmetrically arranged about the intersection of the first diagonal direction and the second diagonal direction of the battery body 100, which facilitates processing and manufacturing.

Specifically, the first recess 16 and the pole element 110 may be arranged at intervals along the first diagonal direction of the battery body 100, that is, the first recess 16 and the pole element 110 may be provided on the same side of the battery body 100 and are arranged diagonally.

Optionally, when the pole element 110 is disposed in the second recess 11, the second recess 11 is disposed on the first surface 12.

In some embodiments, the second recess 11 may be disposed in the middle of the first surface 12, that is, the lateral wall 112 of the second recess 11 does not intersect the circumferential edge of the first surface 12. Here, the term "middle" does not specifically refer to the middle position. Any part that does not intersect the circumferential edge of the first surface 12 can be interpreted as the middle of the first surface 12.

In an embodiment, the second recess 11 is provided at a position where the first surface 12 is close to the intersection of two adjacent second surfaces 13, so that both ends of the lateral wall 112 intersect the two adjacent second surfaces 13, respectively. In other words, the second recess 11 is arranged at the corner of the battery body 100, so that the pole element 110 can be arranged at the corner of the battery body 100. This position can ensure that the battery body 100 can reliably support the pole element 110, and the pole element 110 can be reliably supported when being connected. The second recess 11 in this embodiment includes three openings, one opening is located on the surface where the first surface 12 is located, and the other two openings are located on the surface where two adjacent second surfaces 13 are located. Specifically, FIG. 6 shows that the battery body 100 is provided with a second recess 11, and the recess is located at a corner of the battery body 100.

In some embodiments, the bottom wall 111 may be inclined to the width direction of the battery body 100, that is, the bottom wall 111 is not parallel with the width direction of the battery body 100, which can be further construed as that the bottom wall 111 is inclined to the horizontal plane when the battery is placed horizontally.

In some embodiments, at least part of the bottom wall 111 is parallel to the width direction of the battery body 100, that is, when the battery is placed horizontally, at least part of the bottom wall 111 is parallel to the horizontal plane, which can facilitate the configuration of the pole element 110.

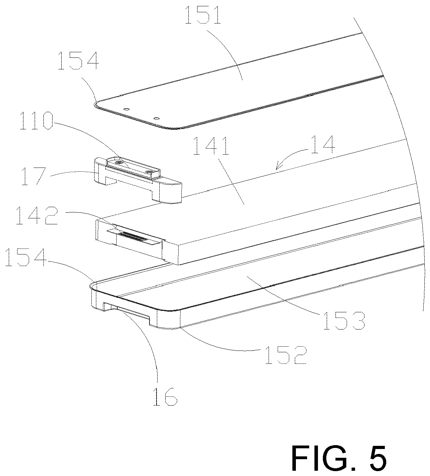

In an embodiment, as shown in FIG. 5, the battery body 100 includes: a cell 14 connected to the pole element 110; a housing 15 in which the cell 14 is located. The first recess 16 and the pole element 110 are both arranged on the housing 15, which is not only convenient for configuration but also has a relatively simple structure. The housing 15 can be configured to configure the pole element 110.

Optionally, the material of the housing 15 may be stainless steel or aluminum, which has good corrosion resistance and sufficient strength.

In an embodiment, the thickness of the housing 15 is uniform, which not only has strong structural stability, but also facilitates processing.

In an embodiment, as shown in FIG. 2 and FIG. 5, the housing 15 includes: a first housing member 151; a second housing member 152, and the second housing member 152 is connected to the first housing member 151 to close the cell 14. The first housing member 151 and the second housing member 152 are arranged separately, which can facilitate the configuration of the cell 14 and the processing is also easy.

In an embodiment, the first recess 16 and the pole element 110 may both be provided on the first housing member 151, or the first recess 16 and the pole element 110 may both be provided on the second housing member 152.

In an embodiment, one of the first recess 16 and the pole element 110 is provided on the first housing member 151, and the other is provided on the second housing member 152, so as to ensure sufficient configuration space, and the strength of the structure can be ensured.

Optionally, the first housing member 151 and the second housing member 152 may both be formed with a receiving cavity 153. After the first housing member 151 and the second housing member 152 are butted, the cell 14 is located in the cavity formed by the two receiving cavities 153. The depth of the receiving cavity 153 of the first housing member 151 and the second housing member 152 may be the same or different, which is not limited by the disclosure.

Optionally, the first housing member 151 is a flat plate, and the second housing member 152 is formed with the receiving cavity 153, and the cell 14 is located in the receiving cavity 153. The arrangement of the flat plate can facilitate subsequent connections and is less difficult to process.

Further, the circumferential edge of the second housing member 152 is provided with a flange 154, and the first housing member 151 is welded to the flange 154, so as to ensure reliable welding of the first housing member 151 and the second housing member 152, and provide a stable connection. The arrangement of the flange 154 is mainly to ensure that the welding area is increased, thereby improving the stability of welding.

Optionally, when the first housing member 151 has the receiving cavity 153, the circumferential edge of the first housing member 151 may also be provided with the flange 154. As shown in FIG. 5, the flange 154 of the first housing member 151 and the flange 154 of the second housing member 152 are welded together.

It should be noted that the flange 154 can be interpreted as a flange edge, for example, a flange edge that is formed in the manner of extending outward from the outer circumferential edge of a flat plate, or a flange edge that is formed in the manner of extending outward from a lateral wall of a structure having the receiving cavity 153. In this configuration, the flange edge is substantially perpendicular to the lateral wall. As mentioned in the foregoing embodiment, the configuration that the flange 154 is provided on the circumferential edges of the first housing member 151 and the second housing member 152 may be set with reference to the above configuration. In this way, the flange 154 of the first housing member 151 and the flange 154 of the second housing member 152 can be directly opposite to each other to facilitate connection.

In an embodiment, as shown in FIG. 5, the cell 14 includes a core body 141 and a tab 142. The tab 142 extends from the length direction of the core body 141; the tab 142 and the pole element 110 are connected to each other. In this case, the pole element 110 can be arranged at the end portion of the battery body 100 to facilitate the connection and make sufficient use of the lengthwise space of the battery. The tab 142 and the pole element 110 can be directly connected, that is, the tab 142 and the pole element 110 can be directly welded, or the tab 142 and the pole element 110 can be connected through a metal adapter. The specific connection method can be welding, and the use of riveting is not excluded, and the disclosure provides no limitation thereto.

It should be noted that the core body 141 includes two pole pieces or more, and the tab 142 includes two single-piece tabs or more. The single-piece tabs extend from their corresponding pole pieces. The width of the single-piece tab is smaller than the width of the pole piece, a plurality of single-piece tabs are stacked to form a tab 142 and connected with the pole element 110. The tab 142 can be welded to the pole element 110. Specifically, the single-piece tabs are made of metal foil with good electrical and thermal conductivity, such as aluminum, copper, or nickel.

In some embodiments, there are two pole elements 110, and the two pole elements 110 are respectively a positive pole element and a negative pole element. Each pole element 110 may include two poles to increase the over-current capacity of the battery. There are also two tabs 142. The two tabs 142 are respectively a positive tab and a negative tab. The positive pole element is connected to the positive tab, and the negative pole element is connected to the negative tab.

It should be noted that the pole element 110 and the housing 15 are insulated from each other. For example, an insulator 120 can be configured for insulation between the two, or an insulating coating can be configured for insulation, the disclosure is not limited thereto. Selection may be made according to actual needs.

As shown in FIG. 2, the pole element 110 includes a terminal 102 and a pole 101, and the pole 101 is disposed on the terminal 102. Optionally, there are at least two poles 101, and at least two poles 101 are both disposed on the terminal 102.

In an embodiment, a part of the lateral wall of the first recess 16 that is close to the cell 14 is inclined to a side away from the cell 14, which not only facilitates processing, but also increases the distance between the cell 14 and the housing 15, thus avoiding the electrical connection between the electric core 14 and the housing 15.

It should be noted that the inclination angle of the lateral wall of the first recess 16 is 1 degree to 20 degrees, that is, when the bottom wall of the first recess 16 is horizontally arranged, the lateral wall of the first recess 16 is inclined at an angle of 1 degree to 20 degrees with respect to the vertical direction. Such configuration angle is not only less difficult for processing and molding, but also can avoid interference between the pole element of the other battery and the lateral wall of the first recess 16.

In an embodiment, at least part of the bottom wall of the first recess 16 is arc-transitioned with at least one of the outer surface of the battery body 100 and the lateral wall of the first recess 16, and/or, at least part of the lateral wall of the first recess 16 is arc-transitioned with the outer surface of the battery body 100, which is not only convenient for processing and molding, but also does not affect the assembly of the cell 14.

It should be noted that a first arc angle is provided between the bottom wall and the lateral wall of the first recess 16, a second arc angle is provided between the bottom wall of the first recess 16 and the outer surface of the battery body 100, and the second arc angle is larger than the first arc angle to facilitate processing. A third arc angle is provided between the lateral wall of the first recess 16 and the outer surface of the battery body 100.

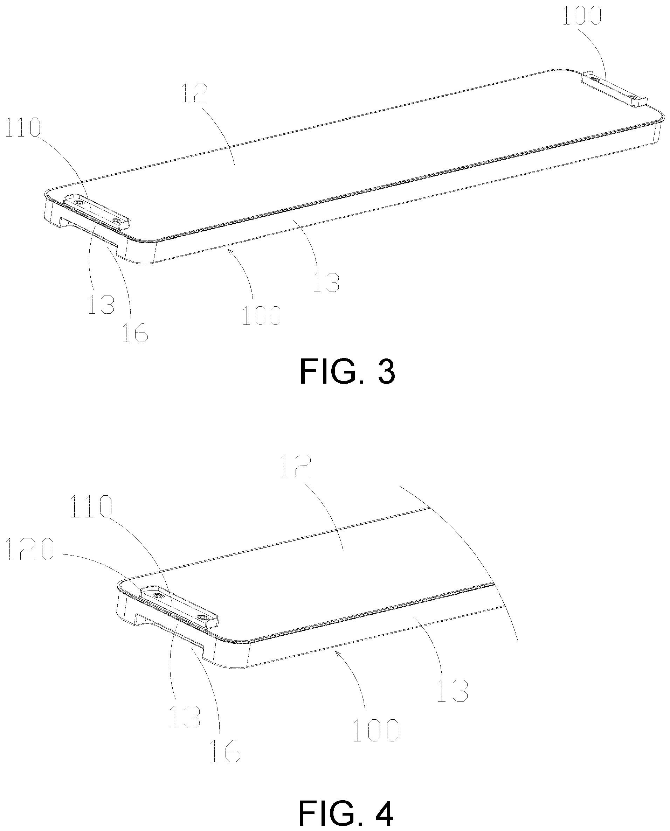

It should be noted that, as shown in FIG. 1 and FIG. 2, the first recess 16 may be located at the corner of the battery body 100, that is, both ends of the lateral wall of the first recess 16 may intersect the two adjacent second surfaces 13. Alternatively, as shown in FIG. 3 and FIG. 4, the first recess 16 may be located in the middle of the battery body 100, that is, both ends of the lateral wall of the first recess 16 may intersect a second surface 13. In some embodiments, it is not excluded that the first recess 16 is located in the middle of the battery body 100, that is, the lateral wall of the first recess 16 does not intersect the second surface 13.

In an embodiment, as shown in FIG. 5, the battery body 100 further includes a bracket 17, which is arranged in the housing 15 and opposite to the pole element 110 to support the pole element 110, so that the support force for the pole element 110 is increased, so as to ensure the configuration stability of the pole element 110, and the bracket 17 can also serve the function of isolation, that is, to avoid the contact between the cell 14 and the housing 15.

In an embodiment, the length of the battery is a, 400mm≤a≤2500mm, the width of the battery is b, and the height of the battery is c, 2b≤a≤50b, and/or 0.5c≤b≤20c.

Further, 50mm≤b≤200mm, 10mm≤c≤100mm.

Preferably, 4b≤a≤25b, and/or, 2c≤b≤10c.

Regarding the battery in the above embodiment, under the condition that sufficient energy density is ensured, the ratio of the battery length to the battery width is relatively large, and further, the ratio of the battery width to the battery height is relatively large.

In an embodiment, the length of the battery is a, and the width of the battery is b, 4b≤a≤7b, that is, the ratio of the battery length to the battery width in this embodiment is larger, thereby increasing the energy density of the battery and facilitating the battery apparatus to be formed subsequently.

In an embodiment, the height of the battery is c, 3c≤b≤7c, and the ratio of the battery width to the battery height is relatively large. The battery apparatus can also be easily formed under the condition that sufficient energy density is ensured.

Optionally, the length of the battery can be 500mm to 1500mm, the width of the battery can be 80mm to 150mm, and the height of the battery can be 15mm to 25mm.

It should be noted that the length of the battery is the size in the length direction of the battery, the width of the battery is the size in the width direction of the battery, and the height of the battery is the size in the height direction of the battery, that is, the thickness of the battery.

In an embodiment, the battery is a stacked battery, which is not only convenient for grouping, but also can be processed to obtain a longer battery.

Specifically, the cell 14 is a stacked cell, and the cell 14 has a first pole piece stacked onto each other, a second pole piece electrically opposite to the first pole piece, and a diaphragm piece arranged between the first pole piece and the second pole piece, so that multiple pairs of the first pole piece and the second pole piece are stacked to form a stacked cell.

Optionally, the battery may be a wound battery, that is, the first pole piece, the second pole piece that is electrically opposite to the first pole piece, and the diaphragm piece arranged between the first pole piece and the second pole piece are wound to obtain a wound cell.

It should be noted that the battery surface can be understood as the outer surface of the battery body 100, that is, the first recess 16, the pole element 110, and the second recess 11 are all provided on the battery surface. Further, the first recess 16, the pole element 110 and the second recess 11 are all arranged on the first surface 12 of the battery surface. In the above-mentioned embodiments, the description is provided with each component being arranged on the battery body 100.

An embodiment of the disclosure also provides a battery adapted to the above-mentioned battery, including: a battery surface; and a pole element. The pole element is arranged on the battery surface and is configured to be accommodated in the first recess 16.

The battery in an embodiment of the disclosure avoids the pole element from occupying the space between two batteries by accommodating the pole element in the first recess 16 of the other battery, thereby reducing the distance between two adjacent batteries, which increases the energy density of the battery apparatus.

In an embodiment, the battery surface includes two opposite first surfaces and four second surfaces arranged around the first surfaces. The pole element is arranged in the corner area of the first surface, and the distance between the pole element and the two adjacent second surfaces is less than 10mm, that is, the pole element is arranged at the corner of the battery, which can provide sufficient supporting force to the pole element, facilitate the configuration of the pole element and the battery will not be damaged easily.

It should be noted that the corner area of the first surface can be understood as the corner of the battery body. The pole element is usually configured by riveting assembly, and configuration at this position can provide sufficient supporting force to ensure high riveting strength. Further, the corner area of the first surface can be understood as the location where the two ends of the diagonal of the first surface are located.

Optionally, the distance between the pole element and two adjacent second surfaces is less than 8mm, 5mm, 3.5mm or 3mm. Since the distance between the two lateral surfaces of the pole element and the two second surfaces is relatively small, it can be ensured that the pole element is arranged at the corners of the battery. The distance between the two lateral surfaces of the pole element and the two second surfaces may be zero.

In an embodiment, a part of the outer circumferential surface of the pole element intersects with a surface where at least one of the two adjacent second surfaces is located, so as to ensure that the position of the pole element is as close as possible to the corner of the battery body. It is not excluded that a part of the outer surface of the pole element and the surface where the corner is located are the same surface, so as to ensure that the battery can provide sufficient support to the pole element.

Optionally, a part of the outer circumferential surface of the pole element intersects with a surface where both of the two adjacent second surfaces are located, that is, the distance between the pole element and the two adjacent second surfaces may be zero.

Optionally, a part of the outer circumferential surface of the pole element intersects with a surface where one of the two adjacent second surfaces is located, and is spaced apart from a surface where the other second surface is located.

In an embodiment, a part of the outer circumferential surface of the pole element is spaced apart from the surface where both of the two adjacent second surfaces are located, that is, the distance between the pole element and the two adjacent second surfaces is greater than 0 and less than 10mm.

In an embodiment, the pole element includes a pole, the pole is arranged in the corner of the first surface, and the distance between the center line of the pole and two adjacent second surfaces is less than 30mm. That is, the pole is arranged at the corners of the battery, and therefore sufficient supporting force can be provided to the pole, which facilitates the configuration of the pole, and the battery will not be damaged easily.

The pole element further includes a terminal. The pole is arranged on the terminal. When the pole is disposed, the pole needs to be riveted. Therefore, the pole is arranged at the corner of the battery to enable the battery body to provide sufficient support to the pole, so as to avoid damaging the battery body.

Optionally, there are at least two poles, which are both arranged on the terminal, one of the poles is arranged at the corner of the first surface, and the minimum distance between the center line of the other pole and the second surface can be less than 30mm. In some embodiments, two poles of the pole element may be respectively located at two corner of the first surface. Under the circumstances, the distance between the center lines of the two poles and the two adjacent second surfaces are all less than 30mm.

In an embodiment, the orthographic projections of the poles on the first surface are all located on the first surface. In some embodiments, it is not excluded that the orthographic projection of the pole on the first surface is located outside the first surface.

It should be noted that, the battery in this embodiment is mainly configured to adapt to the battery having the first recess 16. For other specific structural limitations, please refer to the foregoing embodiment, no further details will be incorporated herein. The battery surface can be understood as the outer surface of the battery body. For the structure of the battery in this embodiment, reference can be made to FIG. 1 and FIG. 2, that is, it may not be necessary to consider whether the first recess 16 is provided.

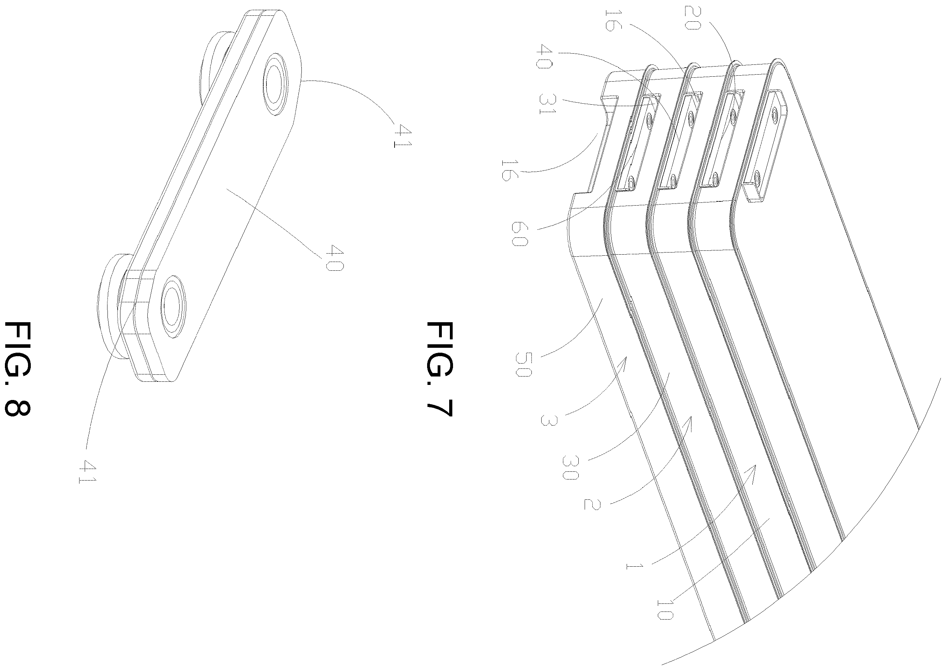

An embodiment of the disclosure further provides a battery apparatus. Please refer to FIG. 7 to FIG. 10. The battery apparatus includes: a first battery 1, the first battery 1 includes a first battery body 10 and a first pole element 20. The pole element 20 is arranged on the first battery body 10, the first battery body 10 is provided with a first recess 16; the second battery 2, the second battery 2 includes a second battery body 30 and a second pole element 40. The second pole element 40 is arranged on the second battery body 30, and is arranged protruding from the second battery body 30, so that the top of the second pole element 40 is higher than the top of the second battery body 30; the first battery 1 is arranged side by side with the second battery 2 so that at least part of the second pole element 40 is located in the first recess 16.

A battery apparatus in an embodiment of the disclosure includes a first battery 1 and a second battery 2. The first battery body 10 of the first battery 1 is provided with the first recess 16, and the second pole element 40 of the second battery 2 is located in the first recess 16 when the first battery 1 and the second battery 2 are formed in a set. In this manner, it is possible to prevent the pole element from occupying the space between the two batteries, and the distance between two adjacent batteries can be reduced, thus improving the energy density of the battery apparatus.

It should be noted that the side-by-side arrangement of the first battery 1 and the second battery 2 means that the first battery 1 and the second battery 2 are grouped. Under the circumstances, the first battery 1 and the second battery 2 can be stacked in an up-down direction or a left-right direction. The disclosure provides no limitation to the arrangement.

Optionally, a part of the second pole element 40 is located in the first recess 16, even if the first battery 1 and the second battery 2 are directly attached, but which enables a part of the second pole element 40 to be located in the second battery body 30. Therefore, a part of the second pole element 40 is located in the first recess 16. Alternatively, the second pole element 40 may be directly disposed on the surface of the second battery body 30. Under the circumstances, the first battery 1 and the second battery 2 are directly attached, so that all of the second pole element 40 can be substantially located in the first recess 16. In an embodiment, the first pole element 20 protrudes from the first battery body 10, so that the top of the first pole element 20 is higher than the top of the first battery body 10. Under the circumstances, the first pole element 20 can be accommodated in the second recess of the other battery, or a second recess for accommodating the first pole element 20 may be provided on the second battery body 30.

For example, when the battery apparatus only includes the first battery 1 and the second battery 2, the protruding part of the first pole element 20 may be located in the second recess of the second battery body 30, while the protruding part of the second pole element 40 may be located in the first recess 16 of the first battery body 10.

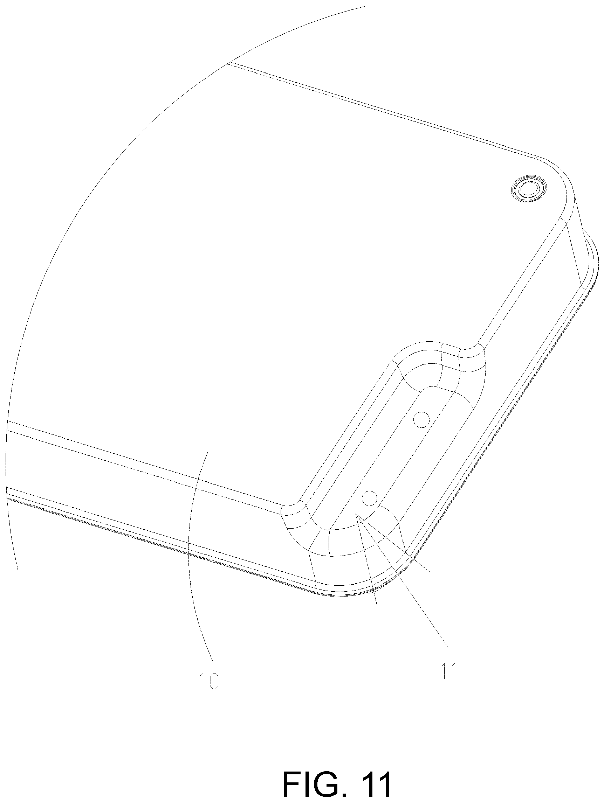

In an embodiment, the first battery body 10 is provided with a second recess 11, and the first pole element 20 is located in the second recess 11, so that the top of the first pole element 20 is not higher than the top of the first battery body 10. That is, the first pole element 20 does not need to rely on the second recesses of other batteries for accommodation. FIG. 11 shows that the first battery body 10 is provided with the second recess 11, and the first pole element 20 is not arranged in the second recess 11, and the second recess 11 is located at the corner of the first battery body 10.

For example, when the battery apparatus only includes the first battery 1 and the second battery 2, the protruding part of the first pole element 20 may be located in the second recess of the second battery body 30, and the second pole element 40 does not have the protruding part, and therefore there is no need to use other batteries for accommodation. Under the circumstances, the second pole element 40 may be arranged toward the second battery body 30 or may be arranged away from the second battery body 30.

In an embodiment, the top of the second pole element 40 is higher than the top of the second battery body 30 and is not greater than the depth of the first recess 16, so as to ensure that the protruding part of the second pole element 40 can be reliably accommodated in the first recess 16. In this manner, it can be ensured that the configuration distance between the first battery 1 and the second battery 2 is minimized.

In an embodiment, the first recess 16 is provided on a side of the first battery body 10 away from the first pole element 20, that is, the first pole element 20 and the first recess 16 are respectively provided on two opposite sides of the first battery body 10. In this manner, the configuration space of the first battery body 10 can be fully utilized, and the arrangement of the first pole element 20 and the first recess 16 will not be difficult. Under the circumstances, when the first pole element 20 has a protruding part, it can be accommodated by another battery.

In an embodiment, the projection of the first recess 16 along the surface of the first battery body 10 where the first pole element 20 is located at least partially overlaps with the first pole element 20, that is, the projections of the first recess 16 and the first pole element 20 along a surface perpendicular to the first battery body 10 at least partially overlap each other. In this manner, when the first battery 1 and the second battery 2 are grouped, the first battery 1 and the second battery 2 can be aligned with each other, and it can be ensured that the second pole element 40 can be reliably accommodated in the first recess 16.

Optionally, the first battery body 10 is approximately a rectangular structure, that is, while ignoring processing and manufacturing errors, the first battery body 10 may have a rectangular structure.

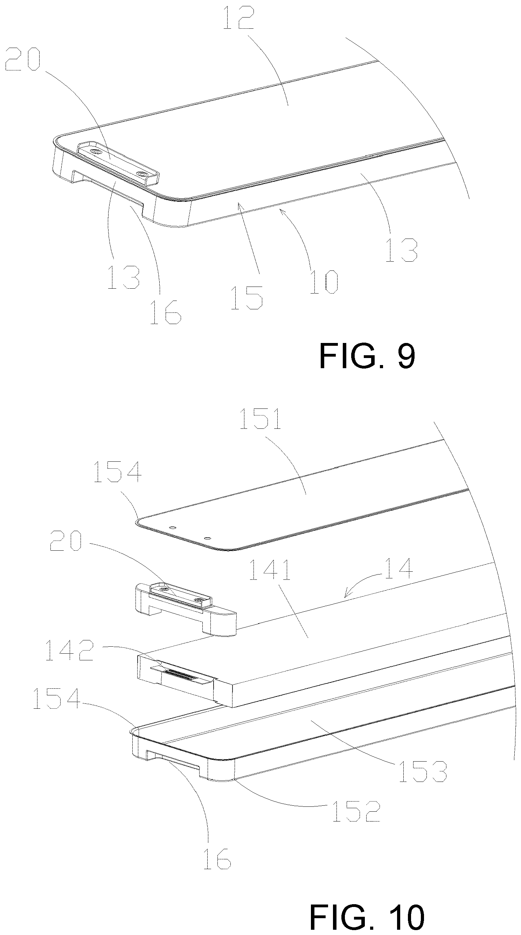

In an embodiment, as shown in FIG. 9, the first battery body 10 includes two opposite first surfaces 12 and four second surfaces 13 arranged around the first surface 12, that is, the first battery body 10 is approximately a rectangular structure. The area of the first surface 12 is greater than the area of the second surface 13; the first recess 16 and the first pole element 20 are both disposed on the first surface 12, so as to ensure that the first pole element 20 has a reliable supporting surface, and the stability of the first pole element 20 can be ensured. Alternatively, the first recess 16 and the first pole element 20 may be provided on the same first surface 12, or the first recess 16 and the first pole element 20 may be provided on the two first surfaces 12, respectively.

In an embodiment, there are two first recesses 16 and two first pole elements 20. When the first recesses 16 are located on the same side of the first battery body 10, the two first recesses 16 are configured to accommodate the two second pole elements 40 respectively. When the first recesses 16 are located on two opposite sides of the first battery body 10, one of the two first recesses 16 is configured to accommodate the second pole element 40, and the other can be configured to accommodate pole elements of other batteries.

In an embodiment, the two first recesses 16 are located on the same side of the first battery body 10, and the two first pole elements 20 are located on the same side of the first battery body 10. There are two second pole elements 40, and the two second pole elements 40 are respectively located in the two first recesses 16, so as to ensure the effective use of the configuration space.

In an embodiment, the two first recesses 16 are symmetrically arranged about the intersection of the first diagonal direction and the second diagonal direction of the first battery body 10, and the two first pole elements 20 are symmetrically arranged about the intersection of the first diagonal direction and the second diagonal direction of the first battery body 10. In this manner, the direction of the first battery body 10 can be adjusted according to the series connection or parallel connection between the batteries during the battery grouping process, that is, the positions of the two first pole elements 20 are switched according to requirement, thereby simplifying the connection between the batteries.

In an embodiment, the two first recesses 16 are arranged at intervals along the first diagonal direction of the first battery body 10, and the two first pole elements 20 are arranged at intervals along the first diagonal direction of the first battery body 10. In this manner, the direction of the first battery body 10 can be adjusted according to the series connection or parallel connection between the batteries during the battery grouping process, that is, the positions of the two first pole elements 20 can be switched according to the requirements, thereby simplifying the connection between the batteries.

In an embodiment, the two first recesses 16 are symmetrically arranged about the intersection of the first diagonal direction and the second diagonal direction of the first battery body 10, and the two first pole elements 20 are symmetrically arranged about the intersection of the first diagonal direction and the second diagonal direction of the first battery body 10, thereby facilitating the series connection of two batteries.

In an embodiment, the first pole element 20 and the first recess 16 are respectively located on two opposite surfaces of the first battery body 10, so as to ensure that the first pole element 20 and the first recess 16 can be arranged reasonably on the first battery body 10. Moreover, it can be ensured that the first recess 16 accommodates the second pole element 40 when the first battery 1 and the second battery 2 are grouped in a set.

Further, the projection of the first pole element 20 along the surface of the first battery body 10 where the first recess 16 is located at least partially overlaps with the first recess 16. In other words, the first pole element 20 and the first recess 16 located on two opposite surfaces of the first battery body 10 are arranged directly opposite to each other in terms of their spatial positions. As such, when the first battery 1 and the second battery 2 are grouped in a set, the first battery 1 and the second battery 2 can be aligned with each other, and it can be ensured that the first recess 16 and the second pole element 40 are adapted to accommodate each other.

In an embodiment, as shown in FIG. 10, the first battery body 10 includes: a cell 14, the cell 14 is connected to the first pole element 20; a housing 15, the cell 14 is located in the housing 15. The first recess 16 and the first pole element 20 are both arranged on the housing 15, which is not only convenient for configuration but also has a relatively simple structure. The housing 15 can be configured to configure the first pole element 20.

In an embodiment, as shown in FIG. 10, the housing 15 includes: a first housing member 151; a second housing member 152, and the second housing member 152 is connected to the first housing member 151 to close the cell 14. The first housing member 151 and the second housing member 152 are provided separately, which can facilitate the configuration of the cell 14 and the processing is also easier.

In an embodiment, the first recess 16 and the first pole element 20 may both be provided on the first housing member 151, or the first recess 16 and the first pole element 20 may both be provided on the second housing member 152.

In an embodiment, one of the first recess 16 and the first pole element 20 is provided on the first housing member 151, and the other is provided on the second housing member 152, so as to ensure sufficient configuration space, and the strength of the structure can be ensured.

Optionally, the first housing member 151 and the second housing member 152 may both be formed with a receiving cavity 153. After the first housing member 151 and the second housing member 152 are butted, the cell 14 is located in the cavity formed by the two receiving cavities 153. The depths of the receiving cavities 153 belonging to the first housing member 151 and the second housing member 152 may be the same or different, which is not limited by the disclosure.

Optionally, the first housing member 151 is a flat plate, and the second housing member 152 is formed with a receiving cavity 153, and the cell 14 is located in the receiving cavity 153. The arrangement of the flat plate can facilitate subsequent connections and is less difficult to process.

Further, the circumferential edge of the second housing member 152 is provided with a flange 154, and the first housing member 151 is welded to the flange 154, so as to ensure reliable welding of the first housing member 151 and the second housing member 152, and a stable connection can be provided. The arrangement of the flange 154 is mainly to ensure that the welding area is increased, thereby improving the stability of welding.

Optionally, when the first housing member 151 has the receiving cavity 153, the circumferential edge of the first housing member 151 may also be provided with the flange 154, and the flange 154 of the first housing member 151 and the flange 154 of the second housing member 152 are welded together.

In an embodiment, as shown in FIG. 10, the cell 14 includes a core body 141 and a tab 142, the tab 142 extends from the length direction of the core body 141. The tab 142 and the first pole elements 20 are connected. Under the circumstances, the first pole element 20 can be arranged at the end portion of the first battery body 10 to facilitate the connection and make effective use of the lengthwise space of the battery.

It should be noted that the structures and arrangement of the second battery body 30 and the second pole element 40 can be deduced from the first pole element 20 and the first battery body 10 described above, and no further description will be incorporated herein. In some embodiments, it is not excluded that the first battery 1 and the second battery 2 have exactly the same structure. In an embodiment, as shown in FIG. 7, the battery apparatus further includes: a third battery 3, and the third battery 3 includes a third battery body 50 and a third pole element 60. The third pole element 60 is arranged on the third battery body 50 and protruding from the third battery body 50, so that the top of the third pole element 60 is higher than the top of the third battery body 50. A side of the second battery body 30 facing away from the second pole element 40 is provided with a groove 31. The third battery 3 and the second battery 2 are arranged side by side, so that a part of the third pole element 60 is located in the groove 31, that is, it is ensured that the pole elements of each battery do not occupy the space between two batteries, the distance between two adjacent batteries can be reduced to increase the energy density of the battery apparatus.

It should be noted that the specific structure of the third battery 3 can be deduced from the first battery 1 described above, and no further description will be incorporated herein. In some embodiments, it is not excluded that the first battery 1, the second battery 2, and the third battery 3 have completely the same structure. The structure of the groove 31 here can be consistent with the first recess 16. The third battery body 50 may also be provided with the first recess 16 as shown in FIG. 7. The first battery surface can be understood as the outer surface of the first battery body 10, the second battery surface can be understood as the outer surface of the second battery body 30, and the third battery surface can be understood as the outer surface of the third battery body 50.

In some embodiments, the battery apparatus may further include a fourth battery, and the specific structure of the fourth battery can also be deduced from the first battery 1, as long as it is ensured that the pole element does not occupy the space between two batteries. The number of the fourth battery is not limited thereto.

In an embodiment, as shown in FIG. 8, a notch 41 is provided on the second pole element 40, and the notch 41 is configured to be opposite to the corner of the first recess 16, so as to prevent the second pole element 40 from interfering with the first recess 16 when entering the first recess 16.

Optionally, the notch 41 includes an arc-shaped surface, and the arc-shaped surface is not only convenient for processing, but also can avoid the problem of stress concentration.

Optionally, the notch 41 includes a plane, that is, it can be understood that a plane is cut directly at the right angle of the second pole element 40.

In an embodiment, there are two notches 41, and the two notches 41 are arranged along the diagonal direction of the second pole element 40, which can be configured for error prevention and improve processing efficiency. In addition, when cutting and welding the flange of the battery housing, the corners of the flange are generally arc-shaped, so as to prevent the protruding arrangement of the corners of the pole element at right angles from interfering with the welding and cutting of the flange.

In some embodiments, the number of notch 41 may be four, that is, each corner of the second pole element 40 is provided with a notch 41.

In an embodiment, the length of the first battery 1 is d, 400mm≤d≤2500mm, the width of the first battery 1 is e, and the height of the first battery 1 is f, 2e≤d≤50e, and/or 0.5 f≤e≤20f.

Optionally, the length of the second battery 2 is d, 400mm≤d≤2500mm, the width of the second battery 2 is e, and the height of the second battery 2 is f, 2e≤d≤50e, and/or 0.5f≤e≤20f.

In an embodiment, the length of the first battery 1 is d, the width of the first battery 1 is e, and the height of the first battery 1 is f, 4e≤d≤7e, and/or, 3f≤e≤7f.

Optionally, the length of the second battery 2 is d, the width of the second battery 2 is e, and the height of the second battery 2 is f, 4e≤d≤7e, and/or, 3f≤e≤7f.

In an embodiment, the first battery 1 is a stacked battery, and the second battery 2 is a stacked battery, which is not only convenient for grouping, but also can be processed to obtain a battery with a longer length.

It should be noted that the structures of the first battery 1, the second battery 2 and the third battery 3 in this embodiment can be deduced from the specific structure of the battery in the foregoing embodiment, and no further description will be incorporated herein.

It should be noted that the first battery 1 and the second battery 2 can be connected in series or in parallel, and the first battery 1 and the second battery 2 are connected by a bus bar. That is, the first pole element 20 and the second pole element 40 can be connected by bus bars. The disclosure provides no limitation to the specific structure of the bus bar, and selection may be made according to actual needs.

It should be noted that the battery apparatus can be a battery pack, or the battery apparatus can be a battery module.

An embodiment of the disclosure further provides a battery pack, including the above-mentioned battery.

The battery of the battery pack in an embodiment of the disclosure includes a battery body 100 and a pole element 110. By providing a first recess 16 on the battery body 100, the pole element of the other battery can be accommodated in the first recess 16 when the batteries are grouped, thereby avoiding the pole element from occupying the space between two batteries. In this manner, the distance between two adjacent batteries can be reduced, thereby increasing the energy density of the battery apparatus.

Optionally, the battery pack includes at least two batteries, and the battery pack may further include a box, and the at least two batteries are arranged in the box.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative, and the real scope and spirit of the present disclosure is defined by the appended claims.

It should be understood that the disclosure is not limited to the precise structures that have been described above and shown in the drawings, and various modifications and variations can be made without departing from the scope thereof. The scope of the disclosure is limited only by the appended claims.

## Claims

1. A battery, comprising:
a battery surface, wherein the battery surface is provided with a first recess (16), and the first recess (16) is configured to accommodate a pole element of the other battery;
a pole element (110), wherein the pole element (110) is arranged on the battery surface and located outside a range where the first recess (16) is located.

2. The battery according to claim 1, the pole element (110) is arranged protruding from the battery surface, so that a top of the pole element (110) is higher than a top of the battery surface.

3. The battery according to claim 1, a second recess (11) is provided on the battery surface, and the pole element (110) is located in the second recess (11) so that a top of the pole element (110) is not higher than a top of the battery surface.

4. The battery according to any one of claims 1 to 3, the first recess (16) is arranged at a side of the battery surface facing away from the first recess (16) of the pole element (110).

5. The battery according to claim 4, a projection of the first recess (16) along a surface of the battery surface where the pole element (110) is located at least partially overlaps with the pole element (110).

6. The battery according to any one of claims 1 to 3, the battery surface comprises two opposite first surfaces (12) and four second surfaces (13) arranged around the first surfaces (12), and an area of the first surfaces (12) is larger than that of the second surfaces (13); and
the first recess (16) is arranged on the first surface (12), and the pole element (110) is arranged on the first surface (12).

7. The battery according to claim 1, a number of the first recess (16) is two, and a number of the pole element (110) is two.

8. The battery according to claim 7, the two first recesses (16) are located on the same side of the battery surface, and the two pole elements (110) are located on the same side of the battery surface.

9. The battery according to claim 8, the two first recesses (16) are symmetrically arranged about an intersection of a first diagonal direction and a second diagonal direction of the battery surface, and the two pole elements (110) are symmetrically arranged about the intersection of the first diagonal direction and the second diagonal direction of the battery surface.

10. The battery according to claim 9, the pole element (110) and the first recess (16) are respectively located on two opposite surfaces of the battery surface.

11. The battery according to claim 10, a projection of the pole element (110) along a surface of the battery surface where the first recess (16) is arranged at least partially overlaps with the first recess (16).

12. The battery according to any one of claims 1 to 3, the first recess (16) and the pole element (110) are located on the same side of the battery surface, and the first recess (16) and the pole element (110) are symmetrically arranged about an intersection of a first diagonal direction and a second diagonal direction of the battery surface.

13. The battery according to any one of claims 1 to 3, at least a part of a bottom wall of the first recess (16) is arc-transitioned with at least one of the battery surface and a lateral wall of the first recess (16), and/or, at least a part of the lateral wall of the first recess (16) is arc-transitioned with the battery surface.

14. The battery according to any one of claims 1 to 3, the battery further comprises:
a cell (14), wherein the cell (14) is connected to the pole element (110);
a housing (15), wherein the cell (14) is located in the housing (15);
wherein the first recess (16) and the pole element (110) are both arranged on the housing (15).

15. The battery according to claim 14, the housing (15) comprises:
a first housing member (151);
a second housing member (152), wherein the second housing member (152) is connected with the first housing member (151) to close the cell (14).

16. The battery according to claim 15, one of the first recess (16) and the pole element (110) is provided on the first housing member (151), and the other is provided on the second housing member (152).

17. The battery according to claim 14, a part of a lateral wall of the first recess (16) close to the cell (14) is inclinedly arranged toward a side away from the cell (14).

18. The battery according to any one of claims 1 to 3, a length of the battery is a, a width of the battery is b, and a height of the battery is c, 2b≤a≤50b, and/or 0.5c≤b≤20c;
400mm≤a≤2500mm.

19. The battery according to any one of claims 1 to 3, the battery is a stacked battery.

20. A battery pack, comprising the battery as claimed in any one of claims 1 to 19.

21. A battery apparatus, comprising:
a first battery (1), wherein the first battery (1) comprises a first battery surface and a first pole element (20), the first pole element (20) is arranged on the first battery surface, and a first recess (16) is provided on the first battery surface;
a second battery (2), wherein the second battery (2) comprises a second battery surface and a second pole element (40), the second pole element (40) is arranged on the second battery surface and protruding from the second battery surface, so that a top of the second pole element (40) is higher than a top of the second battery surface; and
the first battery (1) and the second battery (2) are arranged side by side, so that at least a part of the second pole element (40) is located in the first recess (16).

22. The battery apparatus according to claim 21, the first pole element (20) is arranged protruding from the first battery surface, so that a top of the first pole element (20) is higher than a top of the first battery surface.

23. The battery apparatus according to claim 21, the first battery surface is provided with a second recess (11), and the first pole element (20) is located in the second recess (11), so that a top of the first pole element (20) is not higher than a top of the first battery surface.

24. The battery apparatus according to claim 21, the top of the second pole element (40) is higher than the top of the second battery surface and is not greater than a depth of the first recess (16).

25. The battery apparatus according to any one of claims 21 to 24, the first recess (16) is arranged on a side of the first battery surface facing away from the first pole element (20).

26. The battery apparatus according to claim 25, a projection of the first recess (16) along a surface of the first battery surface where the first pole element (20) is arranged at least partially overlaps with the first pole element (20).

27. The battery apparatus according to any one of claims 21 to 24, the first battery surface comprises two opposite first surfaces (12) and four second surfaces (13) arranged around the first surfaces (12), and an area of the first surfaces (12) is larger than that the second surfaces (13);
the first recess (16) is arranged on the first surfaces (12), and the first pole element (20) is arranged on the first surfaces (12).

28. The battery apparatus according to any one of claims 21 to 24, a number of the first recess (16) is two, and a number of the first pole element (20) is two.

29. The battery apparatus according to claim 28, the two first recesses (16) are located on the same side of the first battery surface, and the two first pole elements (20) are located on the same side of the first battery surface; and
a number of the second pole element (40) is two, and the two second pole elements (40) are respectively located in the two first recesses (16).

30. The battery apparatus according to claim 29, the two first recesses (16) are symmetrically arranged about an intersection of a first diagonal direction and a second diagonal direction of the first battery surface, and the two first pole elements (20) are symmetrically arranged about the intersection of the first diagonal direction and the second diagonal direction of the first battery surface.

31. The battery apparatus according to claim 30, the first pole element (20) and the first recess (16) are respectively located on two opposite surfaces of the first battery surface.

32. The battery apparatus according to claim 31, a projection of the first pole element (20) along a surface of the first battery surface where the first recess (16) is arranged at least partially overlaps with the first recess (16).

33. The battery apparatus according to any one of claims 21 to 24, the first battery (1) comprises:
a cell (14), wherein the cell (14) is connected to the first pole element (20);
a housing (15), wherein the cell (14) is located in the housing (15); and
the first recess (16) and the first pole element (20) are both arranged on the housing (15).

34. The battery apparatus according to claim 33, the housing (15) comprises:
a first housing member (151);
a second housing member (152), wherein and the second housing member (152) is connected with the first housing member (151) to close the cell (14).

35. The battery apparatus according to claim 34, one of the first recess (16) and the first pole element (20) is arranged on the first housing member (151), and the other is arranged on the second housing member (152).

36. The battery apparatus according to any one of claims 21 to 24, the battery apparatus further comprises:
a third battery (3), wherein the third battery (3) comprises a third battery surface and a third pole element (60), the third pole element (60) is arranged on the third battery surface and protruding from the third battery surface, so that a top of the third pole element (60) is higher than a top of the third battery surface;
a groove (31), which is provided on a side of the second battery surface facing away from the second pole element (40), wherein the third battery (3) and the second battery (2) are arranged side by side, so that at least a part of the third pole element (60) is located in the groove (31).

37. The battery apparatus according to any one of claims 21 to 24, a notch (41) is provided on the second pole element (40), and the notch (41) is configured to be opposite to a corner of the first recess (16).

38. The battery apparatus according to any one of claims 21 to 24, a length of at least one of the first battery (1) and the second battery (2) is d, and a width of at least one of the first battery (1) and the second battery (2) is e, a height of at least one of the first battery (1) and the second battery (2) is f, 2e≤d≤50e, and/or 0.5f≤e≤20f; and
400mm≤d≤2500mm.

39. The battery apparatus according to any one of claims 21 to 24, the battery apparatus is a battery module or a battery pack.

40. A battery, adapted for the battery as claimed in claim 1, comprising:
a battery surface;
a pole element, wherein the pole element is arranged on the battery surface and configured to be accommodated in the first recess (16).

41. The battery according to claim 40, the battery surface comprises two opposite first surfaces and four second surfaces arranged around the first surfaces; and
the pole element is arranged in a corner of the first surface, and a distance between the pole element and the two adjacent second surfaces is less than 10 mm.

42. The battery according to claim 41, a part of an outer circumferential surface of the pole element intersects with a surface where at least one of the two adjacent second surfaces is located.

43. The battery according to claim 41, a part of an outer circumferential surface of the pole element is spaced apart from a surface where both of the two adjacent second surfaces are located.

44. The battery according to claim 40, the battery surface comprises two opposite first surfaces and four second surfaces arranged around the first surfaces; and
the pole element comprising a pole, wherein the pole is arranged at a corner of the first surfaces, and a distance between a center line of the pole and the two adjacent second surfaces is less than 30 mm.

## Amended claims

### Amended claims in accordance with Rule 137(2) EPC.

1. A battery, comprising:
a battery surface, wherein the battery surface is provided with a first recess (16), and;
a pole element (110), wherein the pole element (110) is arranged on the battery surface and located outside a range where the first recess (16) is located, wherein the first recess (16) is configured to accommodate a pole element of another battery having the same structure as the battery;
wherein the battery surface comprises two opposite first surfaces (12) and four second surfaces (13) arranged around the first surfaces (12), and an area of the first surfaces (12) is larger than that of the second surfaces (13); and
the first recess (16) is arranged on the first surface (12), and the pole element (110) is arranged on the first surface (12).

2. The battery according to claim 1, the pole element (110) is arranged protruding from the battery surface, so that a top of the pole element (110) is higher than a top of the battery surface.

3. The battery according to claim 1, a second recess (11) is provided on the battery surface, and the pole element (110) is located in the second recess (11) so that a top of the pole element (110) is not higher than a top of the battery surface.

4. The battery according to any one of claims 1 to 3, the first recess (16) is arranged at a side of the battery surface facing away from the first recess (16) of the pole element (110).

5. The battery according to claim 4, a projection of the first recess (16) along a surface of the battery surface where the pole element (110) is located at least partially overlaps with the pole element (110).

6. The battery according to claim 1, a number of the first recess (16) is two, and a number of the pole element (110) is two.

7. The battery according to claim 6, the two first recesses (16) are located on the same side of the battery surface, and the two pole elements (110) are located on the same side of the battery surface.

8. The battery according to claim 7, the two first recesses (16) are symmetrically arranged about an intersection of a first diagonal direction and a second diagonal direction of the battery surface, and the two pole elements (110) are symmetrically arranged about the intersection of the first diagonal direction and the second diagonal direction of the battery surface.

9. The battery according to claim 8, the pole element (110) and the first recess (16) are respectively located on two opposite surfaces of the battery surface.

10. The battery according to claim 9, a projection of the pole element (110) along a surface of the battery surface where the first recess (16) is arranged at least partially overlaps with the first recess (16).

11. The battery according to any one of claims 1 to 3, the first recess (16) and the pole element (110) are located on the same side of the battery surface, and the first recess (16) and the pole element (110) are symmetrically arranged about an intersection of a first diagonal direction and a second diagonal direction of the battery surface.

12. The battery according to any one of claims 1 to 3, at least a part of a bottom wall of the first recess (16) is arc-transitioned with at least one of the battery surface and a lateral wall of the first recess (16), and/or, at least a part of the lateral wall of the first recess (16) is arc-transitioned with the battery surface.

13. The battery according to any one of claims 1 to 3, the battery further comprises:
a cell (14), wherein the cell (14) is connected to the pole element (110);
a housing (15), wherein the cell (14) is located in the housing (15);
wherein the first recess (16) and the pole element (110) are both arranged on the housing (15).

14. The battery according to claim 13, the housing (15) comprises:
a first housing member (151);
a second housing member (152), wherein the second housing member (152) is connected with the first housing member (151) to close the cell (14).

15. The battery according to claim 14, one of the first recess (16) and the pole element (110) is provided on the first housing member (151), and the other is provided on the second housing member (152).

16. The battery according to claim 13, a part of a lateral wall of the first recess (16) close to the cell (14) is inclinedly arranged toward a side away from the cell (14).

17. The battery according to any one of claims 1 to 3, a length of the battery is a, a width of the battery is b, and a height of the battery is c, 2b≤a≤50b, and/or 0.5c≤b≤20c; 400mm≤a≤2500mm.

18. The battery according to any one of claims 1 to 3, the battery is a stacked battery.

19. A battery pack, comprising the battery as claimed in any one of claims 1 to 18.

20. A battery apparatus, comprising:
a first battery (1), wherein the first battery (1) comprises a first battery surface and a first pole element (20), the first pole element (20) is arranged on the first battery surface, and a first recess (16) is provided on the first battery surface;
a second battery (2), wherein the second battery (2) comprises a second battery surface and a second pole element (40), the second pole element (40) is arranged on the second battery surface and protruding from the second battery surface, so that a top of the second pole element (40) is higher than a top of the second battery surface; and
the first battery (1) and the second battery (2) are arranged side by side, so that at least a part of the second pole element (40) is located in the first recess (16),
wherein the first battery surface comprises two opposite first surfaces (12) and four second surfaces (13) arranged around the first surfaces (12), and an area of the first surfaces (12) is larger than that the second surfaces (13);
the first recess (16) is arranged on the first surfaces (12), and the first pole element (20) is arranged on the first surfaces (12).

21. The battery apparatus according to claim 20, the first pole element (20) is arranged protruding from the first battery surface, so that a top of the first pole element (20) is higher than a top of the first battery surface.

22. The battery apparatus according to claim 20, the first battery surface is provided with a second recess (11), and the first pole element (20) is located in the second recess (11), so that a top of the first pole element (20) is not higher than a top of the first battery surface.

23. The battery apparatus according to claim 20, the top of the second pole element (40) is higher than the top of the second battery surface and is not greater than a depth of the first recess (16).

24. The battery apparatus according to any one of claims 20 to 23, the first recess (16) is arranged on a side of the first battery surface facing away from the first pole element (20).

25. The battery apparatus according to claim 24, a projection of the first recess (16) along a surface of the first battery surface where the first pole element (20) is arranged at least partially overlaps with the first pole element (20).

26. The battery apparatus according to any one of claims 20 to 23, a number of the first recess (16) is two, and a number of the first pole element (20) is two.

27. The battery apparatus according to claim 26, the two first recesses (16) are located on the same side of the first battery surface, and the two first pole elements (20) are located on the same side of the first battery surface; and
a number of the second pole element (40) is two, and the two second pole elements (40) are respectively located in the two first recesses (16).

28. The battery apparatus according to claim 27, the two first recesses (16) are symmetrically arranged about an intersection of a first diagonal direction and a second diagonal direction of the first battery surface, and the two first pole elements (20) are symmetrically arranged about the intersection of the first diagonal direction and the second diagonal direction of the first battery surface.

29. The battery apparatus according to claim 28, the first pole element (20) and the first recess (16) are respectively located on two opposite surfaces of the first battery surface.

30. The battery apparatus according to claim 29, a projection of the first pole element (20) along a surface of the first battery surface where the first recess (16) is arranged at least partially overlaps with the first recess (16).

31. The battery apparatus according to any one of claims 20 to 23, the first battery (1) comprises:
a cell (14), wherein the cell (14) is connected to the first pole element (20);
a housing (15), wherein the cell (14) is located in the housing (15); and
the first recess (16) and the first pole element (20) are both arranged on the housing (15).

32. The battery apparatus according to claim 31, the housing (15) comprises:
a first housing member (151);
a second housing member (152), wherein and the second housing member (152) is connected with the first housing member (151) to close the cell (14).

33. The battery apparatus according to claim 32, one of the first recess (16) and the first pole element (20) is arranged on the first housing member (151), and the other is arranged on the second housing member (152).

34. The battery apparatus according to any one of claims 20 to 23, the battery apparatus further comprises:
a third battery (3), wherein the third battery (3) comprises a third battery surface and a third pole element (60), the third pole element (60) is arranged on the third battery surface and protruding from the third battery surface, so that a top of the third pole element (60) is higher than a top of the third battery surface;
a groove (31), which is provided on a side of the second battery surface facing away from the second pole element (40), wherein the third battery (3) and the second battery (2) are arranged side by side, so that at least a part of the third pole element (60) is located in the groove (31).

35. The battery apparatus according to any one of claims 20 to 23, a notch (41) is provided on the second pole element (40), and the notch (41) is configured to be opposite to a corner of the first recess (16).

36. The battery apparatus according to any one of claims 20 to 23, a length of at least one of the first battery (1) and the second battery (2) is d, and a width of at least one of the first battery (1) and the second battery (2) is e, a height of at least one of the first battery (1) and the second battery (2) is f, 2e≤d≤50e, and/or 0.5f≤e≤20f; and 400mm≤d≤2500mm.

37. The battery apparatus according to any one of claims 20 to 23, the battery apparatus is a battery module or a battery pack.

38. A system, comprising a battery as claimed in claim 1 and
the another battery, wherein the pole element of the another battery is accommodated in the first recess (16) of the battery according to claim 1.

39. The battery according to claim 38, the battery surface comprises two opposite first surfaces and four second surfaces arranged around the first surfaces; and
the pole element is arranged in a corner of the first surface, and a distance between the pole element and the two adjacent second surfaces is less than 10 mm.

40. The battery according to claim 39, a part of an outer circumferential surface of the pole element intersects with a surface where at least one of the two adjacent second surfaces is located.

41. The battery according to claim 39, a part of an outer circumferential surface of the pole element is spaced apart from a surface where both of the two adjacent second surfaces are located.

42. The battery according to claim 38, the battery surface comprises two opposite first surfaces and four second surfaces arranged around the first surfaces; and
the pole element comprising a pole, wherein the pole is arranged at a corner of the first surfaces, and a distance between a center line of the pole and the two adjacent second surfaces is less than 30 mm.
